# EUROPEAN PATENT SPECIFICATION

(11) **EP 3 335 546 B1**
(45) Date of publication and mention of the grant of the patent: **16.12.2020**
(21) Application number: 16835010.6
(22) Date of filing: 01.08.2016
(51) Int. Cl.: A01G 7/06, A01N 25/02, A01N 37/42, A01N 37/44, A01P 21/00, C05F 11/10

(54) **PLANT CULTIVATION METHOD WHICH PROMOTES COLORING IN FRUIT**
PFLANZKULTURVERFAHREN ZUR FÖRDERUNG DER FÄRBUNG BEI FRÜCHTEN
PROCÉDÉ DE CULTURE DE PLANTES QUI FAVORISE LA COLORATION DES FRUITS

(30) Priority: 11.08.2015 JP 2015158971
(43) Date of publication of application: 20.06.2018
(73) Proprietor: Ajinomoto Co., Inc., Tokyo 104-8315 (JP)
(72) Inventor: CHEN, Yang, Kawasaki-shi, Kanagawa 210-8681 (JP); IGARASHI, Daisuke, Kawasaki-shi, Kanagawa 210-8681 (JP); SUZUKI, Shunji, Kofu-shi, Yamanashi 400-0005 (JP)
(74) Representative: Strehl Schübel-Hopf & Partner
(86) International application number: PCT/JP2016/072499
(87) International publication number: WO 2017/026313

(56) References cited:
- WO-A1-2015/129841
- JP-A- H0 463 599
- JP-A- H02 270 802
- JP-A- S62 215 503
- US-A1- 2009 124 503
- DATABASE CA [Online] CHEMICAL ABSTRACTS SERVICE, COLUMBUS, OHIO, US; TIAN, XIAOYAN ET AL: "Agricultural agent for promoting "Nanguo" pear fruit coloring and its preparation", XP002788265, retrieved from STN Database accession no. 150:207715 & CN 101 352 165 A (LIAONING SHIHUA UNIVERSITY, PEOP. REP. CHINA) 28 January 2009 (2009-01-28)
- DATABASE WPI Week 199215 Thomson Scientific, London, GB; AN 1992-120158 XP002788266, -& JP H04 63599 A (TONEN CORP) 28 February 1992 (1992-02-28)
- O. SERVETTAZ ET AL: "The effect of benzyladenine on anthocyanin accumulation in excised sunflower cotyledons", PLANT SCIENCE LETTERS., vol. 4, no. 6, 1 June 1975 (1975-06-01), pages 361-368, XP055546352, GB ISSN: 0304-4211, DOI: 10.1016/0304-4211(75)90263-1
- TAKESHI NIIKAWA: 'Effects of Fertilizer Containing (S)-(+)-Abscisic Acid (S-ABA) on Skin Color of 'Fuyu' Persimmon Fruits Before and After the Onset of Coloring' HORTICULTURAL RESEARCH ( JAPAN vol. 13, no. 3, 30 September 2014, pages 267 - 274, XP055363732

## Description

### Technical Field

The present invention relates to a method for promoting coloring of a fruit and a method for producing a fruit.

### Background Art

In order to improve growth of crops and quality of fruits, chemical fertilizers, plant hormones, reflective sheets, and so forth are used, and turning of fruits and so forth are performed. However, there still remain problems concerning influences on environment, validity, secondary negative influence, workload, and cost. Amino acids are expected as ingredients of inexpensive agricultural or horticultural material providing fewer influences on the environment. For example, there are known a flower bud sprouting promoter containing proline as an active ingredient (Patent document 1), an agent for imparting high-temperature tolerance to a plant by a branched chain amino acid such as valine or leucine (Patent document 2), a plant growth-promoting agent containing a liquefied fertilizer containing 18 kinds of amino acids (Patent document 3), an agent for enhancing plant allelopathy effect and/or phytoalexin production containing an amino acid fermentation by-product or a nucleic acid fermentation by-product (Patent document 4), and so forth. It was also reported that hydroponics of tobacco plants in an aqueous solution containing glutamic acid, aspartic acid, and phenylalanine resulted in increased contents of amino acids, chlorophyll, and carotenoids in leaves (Non-patent document 1) .

As described above, techniques of using amino acids for agricultural or horticultural purposes are known. It was also reported that sprinkling of phenylalanine promoted to color grape (Non-patent documents 2 and 3). However, it cannot be said that the coloring-promoting effect thereof is sufficient.

Abscisic acid is a kind of plant hormone, and it is known to participate in dormancy, break dormancy, opening and closing of stomata, growth inhibition, growth suppression, and so forth. As applications thereof for agriculture, there are known those for promotion of growth and coloring of fruits, and so forth, for example, those for promotion of coloring of fruits of grape, persimmon, and apple (Non-patent documents 4, 5, 6, and 7). However, abscisic acid is expensive as a material for agriculture, and it cannot be said that abscisic acid is practicable for obtaining sufficient coloring promotion effect. Also, there is a problem that abscisic acid may provide coloring not synchronized with accumulation of saccharides or reduction of acids, or may induce falling of leaves, depending on the application concentration thereof or environment.

### Prior art references

### Patent documents

Patent document 1: Japanese Patent Laid-open (Kokai) No. 2003-48803
Patent document 2: Japanese Patent Laid-open (Kokai) No. 2012-197249
Patent document 3: South Korean Patent Laid-open No. 2013-107406
Patent document 4: Japanese Patent Laid-open (Kokai) No. 2012-10694

### Non-patent documents

Non-patent document 1: Wu, X-P. et al., Scientia Agricultura Sinica, 2004, 37(3):357-361
Non-patent document 2: El-Sayed, S.F. et al., Journal of Horticultural Science & Ornamental Plants, 2013, 5(3):218-226
Non-patent document 3: Portu, J. et al., Food Chemistry, 2015, 180:171-180
Non-patent document 4: Wasilewska, A. et al., Mol Plant, 2008, 1(2):198-217
Non-patent document 5: Niikawa, T. et al., Horticultural Research (Japan), 2014, 13(3):267-274
Non-patent document 6: Takos, A.M. et al., Plant Physiol., 2006, 142:1216-1232
Non-patent document 7: Jeong, S.T. et al. Plant Science, 2004, 167:247-252
DATABASE CA [Online]CHEMICAL ABSTRACTS SERVICE, COLUMBUS, OHIO, US; TIAN, XIAOYAN ET AL: "Agricultural agent for promoting "Nanguo" pear fruit coloring and its preparation", discloses a method of coloring of a fruit and discloses an agricultural agent containing abscisic acid and phenylalanine. DATABASE WPI, Week 199215, Thomson Scientific, London, GB; AN 1992-120158, discloses an agricultural material containing abscisic acid and phenylalanine. O. SERVETTAZ ET AL: "The effect of benzyl adenine on anthocyanin accumulation in excised sunflower cotyledons", PLANT SCIENCE LETTERS, vol. 4, no. 6, 1 June 1975 (1975-06-01), pages 361-368, discloses the effect of abscisic acid on the growth of sunflower cotyledons. US 2009/124503 A1 discloses the effect of abscisic acid on the red color of grapes.

### Summary of the Invention

### Object to be Achieved by the Invention

An object of the present invention is to provide a method for promoting coloring of fruits and a method for producing a fruit.

### Means for Achieving the Object

The inventors of the present invention conducted various researches in order to achieve the aforementioned object. As a result, they found that, if a specific amino acid and abscisic acid are applied to a fruit plant in combination, the action for increasing the anthocyanin content of fruits can be markedly improved compared with that obtainable with application of abscisic acid or the amino acid alone, and accomplished the present invention.

That is, the present invention is as defined in the appended claims.

### Brief Description of the Drawings

[Fig. 1] A graph showing anthocyanin contents of grape berries (fruits of grape) on which isoleucine was sprinkled.
[Fig. 2] A graph showing anthocyanin contents of grape calluses treated with an amino acid and/or abscisic acid. The vertical axis indicates the amount of anthocyanin (µmol/g callus dry weight, the same shall apply to Figs. 3 to 7). ABA, Ile, Phe, and Leu represent abscisic acid, isoleucine, phenylalanine, and leucine, respectively. The term "control" indicates the result of the control experiment. The symbol "+" indicates combined use.
[Fig. 3] A graph showing anthocyanin contents of grape calluses treated with an amino acid and/or abscisic acid. Asn, Gln, and Arg represent asparagine, glutamine, and arginine, respectively.
[Fig. 4] A graph showing anthocyanin contents of grape calluses treated with an amino acid and/or abscisic acid. Glu, Asp, Cys, and Trp represent glutamic acid, aspartic acid, cysteine, and tryptophan, respectively.
[Fig. 5] A graph showing anthocyanin contents of grape calluses treated with an amino acid and/or abscisic acid. Val, Lys, Pro, Gly, Ser, Met, His, and Thr represent valine, lysine, proline, glycine, serine, methionine, histidine, and threonine, respectively.
[Fig. 6] A graph showing anthocyanin contents of grape calluses treated with an amino acid and/or abscisic acid.
[Fig. 7] A graph showing anthocyanin contents of grape berries treated with an amino acid and/or abscisic acid.
[Fig. 8] A graph showing anthocyanin contents of grape berries of which a bunch was treated with an amino acid and/or abscisic acid. The vertical axis indicates the amount of anthocyanin (mg/g fresh pericarp). Day0, Day1, Day3, and Day10 indicate results obtained 0, 1, 3, and 10 days after the start of the treatment with an amino acid and/or abscisic acid.

### Modes for Carrying out the Invention

Hereafter, the present invention will be explained in detail.

An aspect of the present invention is a method for producing a fruit, which method comprises applying an amino acid selected from leucine and isoleucine, and abscisic acid to a fruit plant, and collecting a fruit from the fruit plant.

Another aspect of the present invention is a method for promoting coloring of a fruit, which method comprises applying an amino acid selected from leucine and isoleucine, and abscisic acid to a fruit plant.

Although the fruit plant is not particularly limited so long as it is a fruit plant that bears a fruit that gets a color, it is preferably a fruit plant that bears a fruit containing an anthocyanin. The anthocyanin may consist of one kind of anthocyanin, or two or more kinds of anthocyanins. The term "fruit containing an anthocyanin" means a fruit of which color is characterized by the anthocyanin, or a fruit in which the anthocyanin is a main coloring matter of the fruit. The fruit containing an anthocyanin may be a fruit that mainly contains an anthocyanin in only one of pericarp (skin) and sarcocarp (flesh) of the fruit, or a fruit that contains an anthocyanin in both of pericarp and sarcocarp. Therefore, the term "coloring of a fruit" means coloring of either one or both of pericarp and sarcocarp. In the present invention, the term "fruit plant" includes both an arboreous plant and an herb plant. The type of the anthocyanin is not particularly limited, and examples include, for example, cyanidin-3-glucoside, malvidin-3-glucoside, delphinidin-3-glucoside, petunidin-3-glucoside, and so forth. Specific examples of the fruit plant include, for example, fruit plants belonging to the family *Vitaceae* or *Rosaceae.* More specific examples include grape, apple, peach, cherry, strawberry plants, and so forth. Although the varieties of these fruit plants are not particularly limited, examples include, for example, Cabernet Sauvignon, Merlot, Tempranillo, Pinot Noir, Syrah, Muscat Bailey A, Kyoho, Pione, Delaware, clone 21, Crimson seedless, Flame seedless, Red globe, and so forth for grape; Tsugaru, Fuji, and so forth for apple; Hakuho, Akatsuki, KawaNakajima white peach, Nikkawa Hakuho, and so forth for peach; Jabore, Satonishiki, Takasago, Napoleon, Benishuho, and so forth for cherry; and Amaou, Tochiotome, Sagahonoka, Diamond Berry, Sakihime, and so forth for strawberry. The fruit plant to which the present invention is applied may consist of one kind of fruit plant, or two or more kinds of fruit plants.

As described in the examples mentioned later, the action of abscisic acid for increasing anthocyanin content of grape becomes higher, when abscisic acid is used in combination with the aforementioned amino acid.

The amino acid may consist of any one of leucine and isoleucine, or may consist of a mixture of them. In the case of such a mixture, quantitative ratios of the amino acids may be arbitrarily determined. These amino acids are preferably L-amino acids. These amino acids may be in the form of a salt or derivative thereof. The amino acid may be purified or roughly purified, or may consist of a culture product (fermentation broth) or fermentation by-product containing the amino acid, or a fractionation product thereof containing the amino acid, so long as the effect of the present invention is not degraded. The amino acid may also consist of a protein decomposition product.

Although abscisic acid may exist as several kinds of isomers, the naturally occurring type abscisic acid ((S)-(+)-abscisic acid) is preferred. Abscisic acid may be a salt thereof or a derivative thereof such as trifluoromethylated abscisic acid. Abscisic acid may also be an abscisic acid agonist having the abscisic acid activity such as pyrabactin, or an abscisic acid decomposition inhibitor such as P450 inhibitor. Abscisic acid can be obtained by, for example, fermentation or chemical synthesis.

The amino acid and abscisic acid are usually applied as a solution to a fruit plant. The concentration of the amino acid at the time of the application is usually 0.2 mM to 100 mM, preferably 0.5 mM to 20 mM, more preferably 1 mM to 10 mM, further preferably 2 mM to 10 mM. When the amino acid consists of both amino acids, these concentration ranges mean ranges of the total concentration of the amino acids. The concentration of abscisic acid at the time of the application is usually 0.1 µM to 10 mM, preferably 1 µM to 5 mM, more preferably 10 µM to 1 mM, further preferably 100 µM to 1 mM.

The amino acid and abscisic acid may be in the form of a solution containing both of them, or in the forms of a solution containing the amino acid and a solution containing abscisic acid. In the latter case, both the solution containing the amino acid and the solution containing abscisic acid are applied to the fruit plant. An amino acid solution and an abscisic acid solution, and a solution containing abscisic acid and the amino acid may henceforth also be generically referred to as "ABA/AA solution (s)" .

The ABA/AA solution(s) is/are preferably applied to a leaf, trunk, stem, fruit surface, or rhizosphere, of a fruit plant. The ABA/AA solution(s) may be applied to two or more of these parts. The ABA/AA solution(s) may be applied to the whole or a part of any of these parts. For example, when the ABA/AA solution(s) is/are applied to a leaf, it may be applied to only surface or back surface of the leaf, or may be applied to both sides. When the ABA/AA solution(s) is/are applied to a fruit, it may be applied to the whole of a fruit surface, or a part of a fruit surface, for example, only the outside of a bunch when the fruit forms the bunch. Application of the ABA/AA solution(s) to soil is also included in the scope of "application to a fruit plant", so long as the amino acid and abscisic acid reach at least the rhizosphere. Examples of the application method include sprinkling to soil surface, irrigation into soil, plowing-in into soil, sprinkling or spreading on leaf surface or fruit of the fruit plant, addition to hydroponic solution, and so forth. Among these, sprinkling on a leaf surface or fruit is preferred. The term "sprinkling on a leaf surface" means that sprinkling on at least leaf surface is sufficient, and the solution may be sprinkled on another part in addition to a leaf surface. The same shall apply to a fruit.

Although the sprinkling amount of the ABA/AA solution(s) is not particularly limited, it is usually 60 g/ha to 30,000 g/ha, preferably 150 g/ha to 600 g/ha, more preferably 300 g/ha to 3,000 g/ha, further preferably 600 g/ha to 3,000 g/ha, in terms of the amount of amino acid. When the amino acid consists of both amino acids, these concentration ranges mean ranges of the total concentration of the amino acids.

The amount of abscisic acid is usually 0.05 g/ha to 5,000 g/ha, preferably 0.5 g/ha to 2,000 g/ha, more preferably 5 g/ha to 2,000 g/ha, further preferably 10 g/ha to 2,000 g/ha.

The ratio of the amounts of the amino acid and abscisic acid is not particularly limited.

As for time of the application of the ABA/AA solution(s), it is preferably applied to a fruit plant after the fruit plant has born a fruit. After bearing of a fruit, the ABA/AA solution(s) is/are preferably applied before or after coloring of the fruit, or before and after coloring of the fruit. Especially in the case of grape, the ABA/AA solution(s) is/are preferably applied during the veraison period. The number of times of the application is not particularly limited, and the ABA/AA solution(s) may be applied once or two or more times. When the ABA/AA solution(s) consist(s) of separate amino acid solution and abscisic acid solution, these solutions may be applied simultaneously or separately. When these solutions are separately applied, it is preferred that the both solutions are applied within seven days.

When the ABA/AA solution(s) is/are sprinkled, the sprinkling method is not particularly limited, but it is desirable that the agricultural or horticultural material spreads over the whole terrestrial part of a plant including a stem, leaf, and fruit, preferably over a leaf surface and/or fruit. When the solution is manually sprinkled, the operation is desirably performed so that spray nozzle for the agricultural or horticultural material turns to the surface or back surface of a leaf. When a boom sprayer is used, the sprinkling volume of the solution is desirably 100 L or larger, preferably 200 to 3,000 L, more preferably 300 to 2,000 L, per ha. There may also be used a so-called electrostatic spraying machine or electrostatic spraying nozzle, which promotes adhesion of sprayed liquid to plant bodies by using static electricity.

When the ABA/AA solution(s) is/are sprinkled on a leaf surface and/or fruit, it may be sprinkled as a mixture with a fertilizer for foliar applications usually used in agriculture so long as the effect of the present invention is not degraded.

When a plant is cultivated according to the method of the present invention, a basal fertilizer and an additional fertilizer can be applied to the soil in an amount and by a method usually used in the corresponding area depending on the type of the plant.

A preferred embodiment of the ABA/AA solution(s) is the agricultural or horticultural material described below.

The agricultural or horticultural material contains an amino acid selected from leucine and isoleucine, and abscisic acid as active ingredients. The descriptions for these amino acids and abscisic acid mentioned above for the aforementioned method of the present invention are also applied to the agricultural or horticultural material. The amino acid and abscisic acid may separately constitute the agricultural or horticultural material as a set, or they may be contained in the agricultural or horticultural material as a mixture thereof. Examples of the form of the agricultural or horticultural material include an agricultural or horticultural material consisting of an amino acid solution and an abscisic acid solution, an agricultural or horticultural material consisting of a solution containing the amino acid and abscisic acid, an agricultural or horticultural material consisting of powdered amino acid, powdered abscisic acid, and a solvent for dissolving them as an optional component, and so forth. When the amino acid and abscisic acid are separately contained, they may be mixed at the time of use, or they may be separately applied to a fruit plant.

The agricultural or horticultural material may contain an arbitrary ingredient in addition to the aforementioned active ingredients, so long as the effect of the present invention is not degraded. Examples of such an ingredient include stabilizer, carrier, pH adjustor, fertilizer component such as minerals for enhancing effect of fertilizer, agrochemical ingredient, binder, filler, and so forth. As these ingredients, those usually used for agricultural chemicals, fertilizers, and so forth can be used, so long as the effect of the present invention is not degraded.

The agricultural or horticultural material may also contain an amino acid other than leucine and isoleucine. However, since such other amino acids include those that reduce the fruit coloring-promoting action of abscisic acid, low contents of such other amino acids in the agricultural or horticultural material are preferred, and it is more preferred that such other amino acids are not contained in the agricultural or horticultural material. For example, the content of such other amino acids is preferably 10 mM or lower, more preferably 1 mM or lower, in terms of the concentration at the time of applying the agricultural or horticultural material to a fruit plant.

The dosage form of the agricultural or horticultural material is not particularly limited so long as a solution applicable to a fruit plant can be prepared at the time of use, and the material may be in any form of use, such as solution, powder, granule, or emulsion.

As described above, when the agricultural or horticultural material is sprinkled on a plant, it is preferably sprinkled on a leaf surface and/or fruit. A spreading agent may be added in order to enhance spreading power of the agricultural or horticultural material on a leaf surface or fruit, and such an ingredient as surfactant may be added in order to enhance penetrating property into a plant of isoleucine. Examples of the spreading agent include, for example, Applauch BI™ (Kao), Mix Power™ (Syngenta Japan), Squash™ (MARUWA Biochemical), and so forth. As the surfactant, any of nonionic surfactants, anionic surfactants, cationic surfactants, and ampholytic surfactants can be used. Examples include polyoxyethylene alkyl ethers, polyoxyethylene alkyl aryl ethers, polyoxyethylene fatty acid esters, sorbitan fatty acid esters, polyoxyethylene sorbitan fatty acid esters, oxyethylene polymers, oxypropylene polymers, polyoxyethylene alkyl phosphoric acid esters, fatty acid salts, alkylsulfuric acid ester salts, alkylsulfonic acid salts, alkylarylsulfonic acid salts, alkylphosphoric acid salts, alkylphosphoric acid ester salts, polyoxyethylene alkylsulfuric acid esters, quaternary ammonium salts, oxyalkylamines, lecithin, saponin, and so forth. In addition, gelatin, casein, starch, agar, polyvinyl alcohol, sodium alginate, and so forth can be used as an auxiliary as required.

At the time of use, the agricultural or horticultural material or a component thereof in the form of solid or powder may be dissolved or dispersed in a solvent such as water and alcohol. Also, the agricultural or horticultural material or a component thereof in the form of liquid may be diluted with a solvent such as water and alcohol. Examples of the alcohol include ethanol, methanol, isopropyl alcohol, and so forth.

The concentration of leucine and/or isoleucine, at the time of use of the agricultural or horticultural material is as described for the method of the present invention. The content of these amino acids in the agricultural or horticultural material is not particularly limited so long as these amino acids are applied as a solution of the prescribed concentration described above at the time of use. The content of these amino acids in the agricultural or horticultural material is, for example, 1% by weight or higher, preferably 50% by weight or higher, more preferably 70% by weight or higher, in terms of dry weight, and a content in such a range is preferred in view of evasion of harmful effect of impurities such as damage caused by salt, and actualization of the effects. Although the agricultural or horticultural material may be distributed in the form of solid or solution, when it is distributed in the form of solution, the concentration thereof is preferably 0.5 mM to the saturation concentration. The solubility in water of isoleucine is about 0.3 M (40.2 g/L (20°C), 41.2 g/L (50°C)), the same of phenylalanine is about 0.2 M (27 g/L (20°C), 40 g/L (50°C)), and the same of leucine is about 0.2 M (24 g/L (20°C), 29 g/L (50°C)).

The concentration of abscisic acid at the time of use of the agricultural or horticultural material is also as described for the method of the present invention. The content of abscisic acid in the agricultural or horticultural material is not particularly limited so long as it can be applied as a solution of the prescribed concentration described above at the time of use. When the agricultural or horticultural material is in the form of solution, the concentration of abscisic acid is preferably 0.5 mM to the saturation concentration.

### Examples

Hereafter, the present invention will be more specifically explained with reference to examples. In the examples, amino acids are L-amino acids.

### Reference Example 1: Effect of isoleucine on anthocyanin content in grape cultured cells

### (1) Effect of isoleucine and various amino acids on coloring of grape cultured cells

Cells of a cell line derived from European grape *(Vitis vinifera L.)* possessed by RIKEN BioResource Center (VR, management number RPC00003) were subcultured on MS agar medium. The subcultured VR calluses were each transferred to MS agar medium containing 5 mM of each amino acid solution, and cultured. As a positive control, 100 µM abscisic acid (ABA) was used, for which coloring-promoting effect is known. Five days after the transfer, each callus was freeze-dried and ground, and anthocyanin was extracted with a 1% HCl solution in MeOH. The absorbance of the extract was measured at 530 nm, and the content of anthocyanin was quantified by using cyanidin-3-glucoside as a standard substance. The relative value of the content of anthocyanin accumulated in the callus of each amino acid treatment group was determined based on the content of anthocyanin extracted from the callus of the positive control treatment group, which was taken as 100%.

The results are shown in Table 1. The callus treated with isoleucine (Ile) showed the highest anthocyanin content.

**Table 1: Analysis of anthocyanin contents in grape calluses treated with various amino acids**

| **Amino acid** | **Pro** | **Ile** | **Asp** | **Glu** | **Ser** | **Asn** | **Gln** | **Gly** | **His** | **Arg** |
|---|---|---|---|---|---|---|---|---|---|---|
| **Relative content of anthocyanin** | **27%** | **76%** | **11%** | **4%** | **38%** | **38%** | **18%** | **23%** | **29%** | **9%** |
| | | | | | | | | | | |

| **Amino acid** | **Val** | **Met** | **Ala** | **Trp** | **Phe** | **Cys** | **Leu** | **Thr** | **Lys** | **Try** |
|---|---|---|---|---|---|---|---|---|---|---|
| **Relative content of anthocyanin** | **6%** | **42%** | **7%** | **4%** | **40%** | **6%** | **30%** | **35%** | **15%** | **0%** |

### (2) Effect of isoleucine on coloring of grape berries

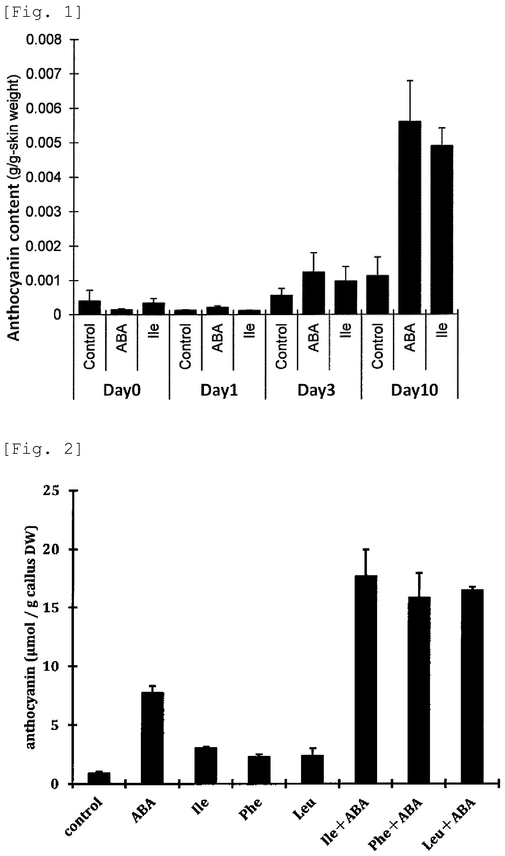

For the experiment, Cabernet Sauvignon grape plants cultivated in a test farm and having entered into the veraison period were used. Eight bunches of grapes on each of two grape plants, 16 bunches of grapes in total, were selected for each test group, and on these bunches of grapes, about 6.25 mL per bunch of 0.1% Applauch BI (Kao, control), 1 g/L of abscisic acid (ABA) + 0.1% Applauch BI (positive control), or 10 mM isoleucine (Ile) + 0.1% Applauch BI was sprinkled. As samples, 4 bunches for each test group were collected 4 times. Anthocyanin contained in pericarps was extracted with a mixed solution of water and acetone (1:2), and the anthocyanin content was measured in the same manner as described above. The results are shown in Fig. 1. It was demonstrated that, if grape berries are treated with Ile, the anthocyanin content in pericarps increases.

As described above, correlation of the coloring-promoting effect observed for the grape cultured cells and the coloring-promoting effect for grape berries on trees was demonstrated.

### Example 1: Evaluation of coloring of grape provided by amino acid treatment

Cells of a cell line derived from grape (*Vitis vinifera L*.) possessed by RIKEN BioResource Center (VR, management number RPC00003) were subcultured on MS agar medium. The VR calluses were each transferred to MS agar medium containing 5 mM of each amino acid, or 100 µM abscisic acid (ABA), or 5 mM of each amino acid and 100 µM ABA (abscisic acid), and cultured. The culture was performed at 25°C with 16 hours of light irradiation in one day.

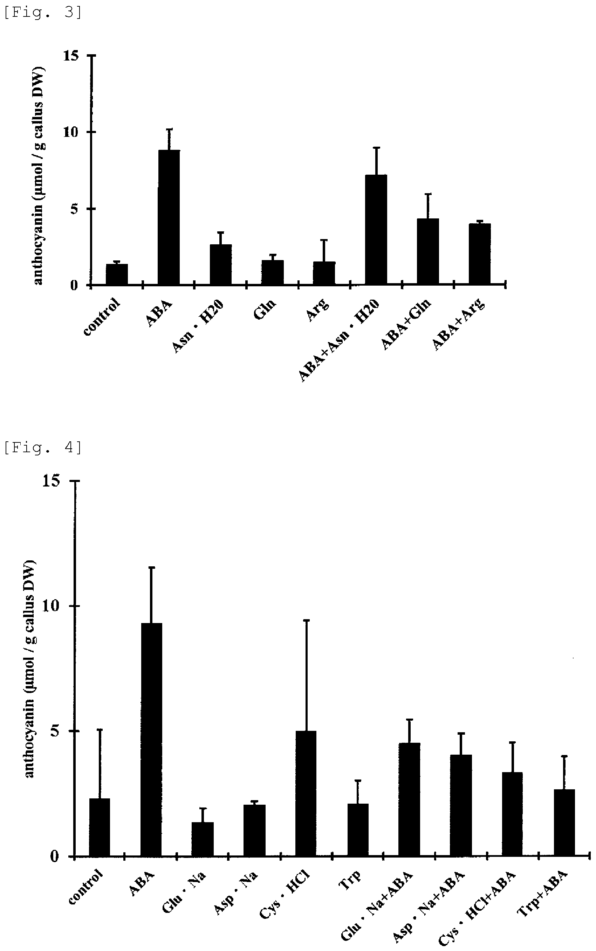

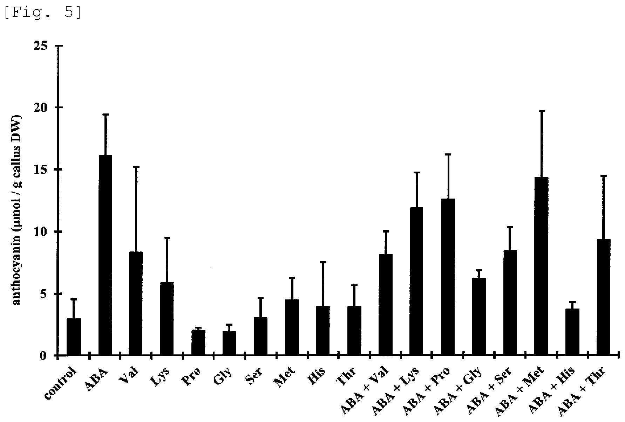

After 5 days, each callus was freeze-dried and ground, and anthocyanin was extracted with a 1% HCl solution in MeOH. The absorbance of the extract was measured at 530 nm, and the content of anthocyanin was quantified by using cyanidin-3-glucoside as a standard substance, and shown in the graphs in terms of the content in dry weight (DW) of the callus. The amounts of anthocyanin per 1 g dry weight of callus are shown in Figs. 2 to 5. When the calluses were treated with a combination of ABA and isoleucine (Ile), phenylalanine (Phe) (reference example), or leucine (Leu), the anthocyanin contents of the calluses markedly increased compared with that observed with the treatment with ABA alone.

### Example 2: Evaluation of coloring of grape provided by amino acid treatment

Cells of a cell line derived from grape (*Vitis vinifera L*.) possessed by RIKEN BioResource Center (VR, management number RPC00003) were subcultured on MS agar medium. The VR calluses were each transferred to MS agar medium containing 0 to 5 mM of phenylalanine (Phe) or isoleucine (Ile) in combination with 0 to 100 µM abscisic acid (ABA), and cultured. The culture was performed at 25°C with 16 hours of light irradiation in one day.

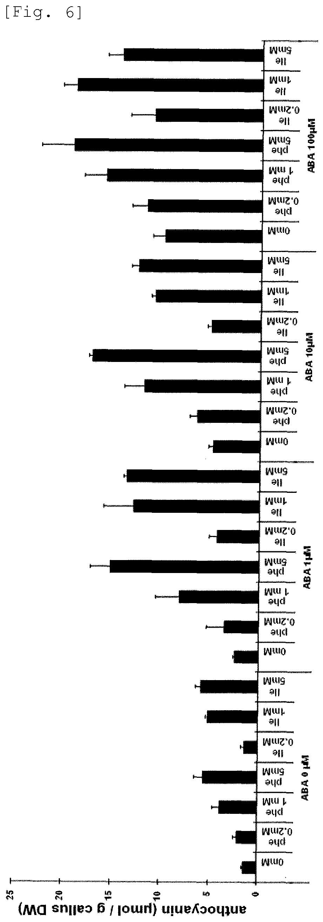

After 5 days, each callus was freeze-dried and ground, and anthocyanin was extracted with a 1% HCl solution in MeOH. The absorbance of the extract was measured at 530 nm, and the content of anthocyanin was quantified by using cyanidin-3-glucoside as a standard substance, and shown in the graph in terms of the content in dry weight (DW) of the callus. The amounts of anthocyanin per 1 g dry weight of callus are shown in Fig. 6. When the calluses were treated with a combination of ABA and isoleucine (Ile) or phenylalanine (Phe) (reference example), the anthocyanin contents of the calluses markedly increased compared with that observed with the treatment with ABA alone. Furthermore, when the addition concentrations of ABA and the amino acids were increased, the amount of anthocyanin also increased.

### Example 3 (Reference only): Evaluation of coloring of Cabernet Sauvignon berries provided by amino acid treatment

A 0.3 M sucrose culture solution containing 10 mM phenylalanine (Phe) and 1 mM abscisic acid (ABA) was infiltrated into a filter paper. Cabernet sauvignon berries before entering into the veraison period (fruit maturing starting period) were placed on the surface of the filter paper, and cultured. The culture was performed at 25°C with 16 hours of light irradiation in one day.

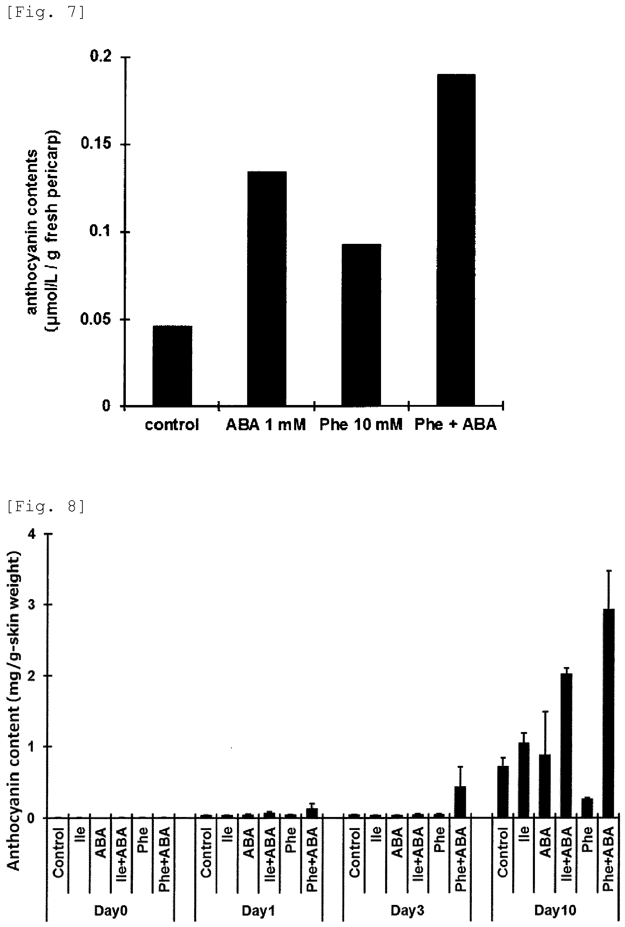

After 5 days, the pericarps of berries were stripped and ground, and anthocyanin was extracted with a 1% HCl solution in MeOH. The absorbance of the extract was measured at 530 nm, and the content of anthocyanin was quantified by using cyanidin-3-glucoside as a standard substance, and shown in Fig. 7 in terms of the content in fresh pericarp weight (FW). As a result of the treatment with a combination of ABA and phenylalanine (Phe), the anthocyanin content in the pericarp markedly increased compared with that observed with the treatment with ABA alone.

As described above, the coloring-promoting effect obtained in the grape cultured cells and the coloring-promoting effect obtained in berries correlated. On the basis of these results and the result of Reference Example 1, it is considered that the effect obtained in Examples 1 and 2 can be similarly obtained on fruit plants.

### Example 4: Effect of coloring of Cabernet Sauvignon berries provided by amino acid treatment on fruit plant

For the experiment, Cabernet Sauvignon plants cultivated in a test farm and having entered into the veraison period were used. The grape plants were divided into three sections, and the experiment was performed in triplicate. Six treatment groups were randomly set for the grape plants of each section. On the fruit bunches of each treatment group, control, 10 mM isoleucine (Ile), 0.1 g/L (378 µM) abscisic acid (ABA), 10 mM isoleucine + 0.1 g/L abscisic acid (Ile+ABA), 10 mM phenylalanine (Phe), (reference example), or 10 mM phenylalanine + 0.1 g/L abscisic acid (Phe+ABA) (reference example), each containing 0.1% Applauch BI (Kao), was sprinkled. These solutions each were sprinkled in such a volume that the berries were sufficiently wetted. After 0, 1, 3, and 10 days from the start of the sprinkling, the bunches of each treatment group were harvested, anthocyanin was extracted from the pericarps of the berries (fruit balls) with a mixed solution of water and acetone (1:2), and the anthocyanin content was measured. The results are shown in Fig. 8. When the berries on the fruit plants were treated with the combination of Phe and ABA, the anthocyanin content in the pericarps increased compared with that obtained with the treatment with ABA alone.

### Industrial Applicability

By using abscisic acid and a specific amino acid in combination, coloring of fruits can be further promoted compared with use of abscisic acid or the amino acid alone. According to the present invention, coloring-promoting effect comparable to that obtainable with abscisic acid alone can be attained with a smaller amount of abscisic acid. Amino acids are highly safe, and more inexpensive compared with abscisic acid, and provides fewer side reactions to plants.

## Claims

1. A method for promoting coloring of a fruit, the method comprising:
applying one or more kinds of amino acids selected from leucine and isoleucine, and abscisic acid to a fruit plant.

2. The method according to claim 1,
wherein the amino acid(s) and abscisic acid are applied to the fruit plant as a solution containing the amino acid(s) and abscisic acid, or as an amino acid solution and an abscisic acid solution,
wherein the application concentration of the amino acid(s) is 0.2 mM to 100 mM, and
wherein the application concentration of abscisic acid is 0.1 µM to 10 mM.

3. The method according to claim 1, wherein the amino acid(s) is/are L-amino acid(s).

4. The method according to any one of claims 1 to 3, wherein the fruit plant is a fruit plant that bears a fruit containing anthocyanin.

5. The method according to any one of claims 1 to 4, wherein the fruit plant consists of one or more kinds of fruit plants selected from *Vitaceae* and *Rosaceae* plants.

6. The method according to claim 5, wherein the fruit plant consists of one or more kinds of fruit plants selected from grape, apple, peach, cherry, and strawberry plants.

7. The method according to any one of claims 1 to 6, wherein the amino acid(s) is/are applied as a solution containing:
a purified product of the amino acid(s),
a fermentation broth or fermentation by-product of the amino acid(s), or
a fractionation product thereof containing the amino acid (s) .

8. The method according to any one of claims 1 to 7, wherein the amino acid(s) and abscisic acid are sprinkled to a leaf, trunk, stem, fruit surface, or rhizosphere of the fruit plant.

9. A method for producing a fruit, the method comprising:
applying one or more kinds of amino acids selected from leucine and isoleucine, and abscisic acid to a fruit plant; and
collecting a fruit from the fruit plant.

10. The method according to claim 9,
wherein the amino acid(s) and abscisic acid are applied to the fruit plant as a solution containing the amino acid(s) and abscisic acid, or as an amino acid solution and an abscisic acid solution,
wherein the application concentration of the amino acid(s) is 0.2 mM to 100 mM, and
wherein the application concentration of abscisic acid is 0.1 µM to 10 mM.

## Patentansprüche

1. Verfahren zur Förderung der Färbung einer Frucht, wobei das Verfahren umfasst:
Auftragen einer oder mehrerer Arten von unter Leucin und Isoleucin ausgewählten Aminosäuren sowie von Abscisinsäure auf eine Obstpflanze.

2. Verfahren nach Anspruch 1,
wobei die Aminosäure(n) und Abscisinsäure auf die Fruchtpflanze als eine die Aminosäure(n) und Abscisinsäure enthaltende Lösung oder als eine Aminosäurelösung und eine Abscisinsäurelösung aufgetragen werden,
wobei die Anwendungskonzentration der Aminosäure(n) 0,2 mM bis 100 mM beträgt, und
wobei die Anwendungskonzentration der Abscisinsäure 0,1 µM bis 10 mM beträgt.

3. Verfahren nach Anspruch 1, wobei die Aminosäure(n) L-Aminosäure(n) ist/sind.

4. Verfahren nach einem der Ansprüche 1 bis 3, wobei die Fruchtpflanze eine Fruchtpflanze ist, die eine Frucht trägt, die Anthocyanin enthält.

5. Verfahren nach einem der Ansprüche 1 bis 4, wobei die Fruchtpflanze aus einer oder mehreren Arten von Fruchtpflanzen besteht, die aus *Vitaceae-* und Rosaceae-Pflanzen ausgewählt sind.

6. Verfahren nach Anspruch 5, wobei die Obstpflanze aus einer oder mehreren Arten von Obstpflanzen besteht, die aus Trauben-, Apfel-, Pfirsich-, Kirsch- und Erdbeerpflanzen ausgewählt sind.

7. Verfahren nach einem der Ansprüche 1 bis 6, wobei die Aminosäure(n) als eine Lösung aufgetragen wird/werden, die enthält:
ein gereinigtes Produkt der Aminosäure(n),
eine Fermentationsbrühe oder ein Fermentationsnebenprodukt der Aminosäure(n), oder
ein die Aminosäure(n) enthaltendes Fraktionierungsprodukt.

8. Verfahren nach einem der Ansprüche 1 bis 7, bei dem die Aminosäure(n) und Abscisinsäure(n) auf ein Blatt, den Stamm, den Stengel, die Fruchtoberfläche oder die Rhizosphäre der Fruchtpflanze gesprüht wird (werden).

9. Verfahren zur Erzeugung einer Frucht, wobei das Verfahren umfasst:
Auftragen einer oder mehrerer Arten von unter Leucin und Isoleucin ausgewählten Aminosäuren sowie von Abscisinsäure auf eine Obstpflanze; und
das Sammeln einer Frucht von der Obstpflanze.

10. Verfahren nach Anspruch 9,
wobei die Aminosäure(n) und Abscisinsäure auf die Fruchtpflanze als eine die Aminosäure(n) und Abscisinsäure enthaltende Lösung oder als eine Aminosäurelösung und eine Abscisinsäurelösung aufgetragen werden,
wobei die Anwendungskonzentration der Aminosäure(n) 0,2 mM bis 100 mM beträgt, und
wobei die Anwendungskonzentration der Abscisinsäure 0,1 µM bis 10 mM beträgt.

## Revendications

1. Procédé pour favoriser la coloration d'un fruit, le procédé comprenant :
l'application d'un ou plusieurs types d'acides aminés choisis parmi la leucine et l'isoleucine, et d'acide abscissique sur une plante à fruits.

2. Procédé selon la revendication 1,
dans lequel l'acide (les acides) aminé(s) et l'acide abscissique sont appliqués sur la plante à fruits en tant que solution contenant l'acide (les acides) aminé(s) et l'acide abscissique, ou en tant que solution d'acides aminés et que solution d'acide abscissique,
dans lequel la concentration d'application de l'acide (des acides) aminé(s) est de 0,2 mM à 100 mM, et
dans lequel la concentration d'application de l'acide abscissique est de 0,1 µM à 10 mM.

3. Procédé selon la revendication 1, dans lequel l'acide (les acides) aminé(s) est/sont un (des) acide(s) L-aminé(s).

4. Procédé selon l'une quelconque des revendications 1 à 3, dans lequel la plante à fruits est une plante à fruits qui porte un fruit contenant de l'anthocyanine.

5. Procédé selon l'une quelconque des revendications 1 à 4, dans lequel la plante à fruits est constituée d'un ou plusieurs types de plantes à fruits choisis parmi les plantes *Vitaceae* et *Rosaceae.*

6. Procédé selon la revendication 5, dans lequel la plante à fruits est constituée d'un ou plusieurs types de plantes à fruits choisis parmi la vigne, le pommier, le pêcher, le cerisier et le fraisier.

7. Procédé selon l'une quelconque des revendications 1 à 6, dans lequel l'acide (les acides) aminé(s) est/sont appliqué(s) en tant que solution contenant :
un produit purifié de l'acide (des acides) aminé(s),
un bouillon de fermentation ou un sous-produit de fermentation de l'acide (des acides) aminé(s), ou
un produit de fractionnement de ceux-ci contenant l'acide (les acides) aminé(s).

8. Procédé selon l'une quelconque des revendications 1 à 7, dans lequel l'acide (les acides) aminé(s) et l'acide abscissique sont aspergés sur une feuille, un tronc, une tige, une surface des fruits ou une rhizosphère de la plante à fruits.

9. Procédé de production d'un fruit, le procédé comprenant :
l'application d'un ou plusieurs types d'acides aminés choisis parmi la leucine et l'isoleucine, et d'acide abscissique sur une plante à fruits ; et
la collecte d'un fruit à partir de la plante à fruits.

10. Procédé selon la revendication 9,
dans lequel l'acide (les acides) aminé(s) et l'acide abscissique sont appliqués sur la plante à fruits en tant que solution contenant l'acide (les acides) aminé(s) et l'acide abscissique, ou en tant que solution d'acides aminés et que solution d'acide abscissique,
dans lequel la concentration d'application de l'acide (des acides) aminé(s) est de 0,2 mM à 100 mM, et
dans lequel la concentration d'application de l'acide abscissique est de 0,1 µM à 10 mM.
